## Europäisches Patentamt
## European Patent Office
## Office européen des brevets

(19)

(11) Numéro de publication: **0 027 253**
**B1**

(12) **FASCICULE DE BREVET EUROPEEN**

(45) Date de publication du fascicule du brevet: **23.11.83**

(51) Int. Cl.³: **B 23 B 3/16**, B 23 Q 3/157

(21) Numéro de dépôt: **80106101.1**

(22) Date de dépôt: **08.10.80**

(54) Centre de tournage.

(30) Priorité: **15.10.79 FR 7925556**

(43) Date de publication de la demande:
**22.04.81 Bulletin 81/16**

(45) Mention de la délivrance du brevet:
**23.11.83 Bulletin 83/47**

(84) Etats contractants désignés:
**AT BE CH DE FR GB IT LI LU NL SE**

(56) Documents cités:
**DE - A - 2 429 330**
**FR - A - 2 274 385**
**US - A - 4 070 934**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Hornecker, Frédéric**
**22A, avenue Messmer**
**F-67400 Illkirch-Graffenstaden (FR)**
Inventeur: **Wolff, Paul**
**1, rue du Verger**
**F-67400 Illkirch-Graffenstaden (FR)**

(74) Mandataire: **Weinmiller, Jürgen et al,**
**Zeppelinstrasse 63**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Centre de tournage

La présente invention concerne un centre de tournage du type comportant un banc, une broche montée dans une poupée disposée sur ledit banc, au moins une tourelle porte-outils amovible, montée sur un chariot, la tourelle étant montée de façon déplaçable en translation de l'extérieur de l'espace de travail dans lequel se trouve la pièce à usiner vers l'intérieur dudit espace de travail pour usinage d'une pièce et inversément, ladite tourelle comprenant une embase et une partie interchangeable portant les outils, des moyens étant prévus pour remplacer automatiquement à l'extérieur dudit espace de travail cette partie interchangeable portant des outils usés par une autre partie interchangeable. Un tel centre de tournage est connu, par exemple à partir du document DE—A—24 29 330.

Dans les centres de tournage à commande numérique, il est nécessaire de mettre en action successivement et automatiquement, de multiples outils.

A cet effet, on met en oeuvre un changeur d'outils comprenant, par exemple, une double pince dont l'une vient de saisir l'outil qui a terminé une séquence d'usinage ou qui est usé, tandis que l'autre vient saisir un nouvel outil dans le magasin porté par un chariot et le met à la place de l'outil précédent. Une telle substitution s'effectue lorsque l'outil n'est pas utilisé. Cette solution présente l'avantage d'éliminer les risques de collision entre outils en réserve et pièce à usiner ou contre-poupée. Elle donne cependant lieu à des temps de changements d'outils longs et incompatibles avec des fabrications de moyenne série, dont les temps de cycles sont souvent très courts, de l'ordre de 30 secondes à 4 minutes. Par ailleurs, elle ne permet pas de changement automatique de magasin.

Une autre solution consiste à mettre en oeuvre une ou deux tourelles porte-outils qui évoluent par rotation continue ou discontinue et indexage automatique pour sélectionner l'outil approprié à la séquence de travail. La concentration dans un espace réduit de l'outil en action et des outils en attente, conduit à des temps de changement courts mais implique aussi des précautions particulières dans l'établissement des cycles pour éviter les collisions entre outils et pièces, outils et poupée ou contre-poupée, outils de deux chariots entre eux.

Aucune de ces solutions précédentes ne permet de remplacer un outil usé sans arrêter la machine, ce qui est incompatible avec l'objectif de productivité des moyens automatiques à commande numérique.

La présente invention permet de remédier à de tels inconvénients.

L'invention a pour objet un centre de tournage tel que spécifié ci-dessus, qui est caractérisé par le fait qu'il comporte deux tourelles porte-outils, montées chacune sur un chariot, chaque chariot étant mobile indépendamment de l'autre dans une direction parallèle à l'axe de la broche et en ce que ledit banc comporte une première ouverture au travers de laquelle passent les moyens de transmission de mouvement entre un moteur situé sous le banc et la broche de la poupée et une seconde ouverture pour le passage des liaisons de commande avec des équipements auxiliaires situés derrière la poupée de manière à laisser le libre passage des chariots le long des faces latérales de la poupée et le libre passage des tourelles derrière la poupée pour le changement des parties interchangeables.

Dans ce contexte il est connu par le document FR—A—22 74 385 de prévoir deux tourelles sur un seul centre de tournage. Néanmoins, les deux tourelles étant au travail simultanément, le problème posé ci-dessus n'est pas résolu par ce dispositif.

Certaines caractéristiques d'une mise en oeuvre préférée de l'invention ressortiront de la description qui suit, donnée à titre d'exemple purement illustratif mais nullement limitatif en référence aux dessins annexés dans lesquels:

— la figure 1 représente en élévation un centre de tournage selon l'invention,
— la figure 2 représente en vue de côté ledit centre de tournage,
— la figure 3 représente la poupée dudit centre de tournage avec la disposition particulière de ses organes d'entraînement et de raccordement.
— la figure 4 représente une tourelle porte-outil mise en oeuvre dans le centre de tournage selon la figure 1.

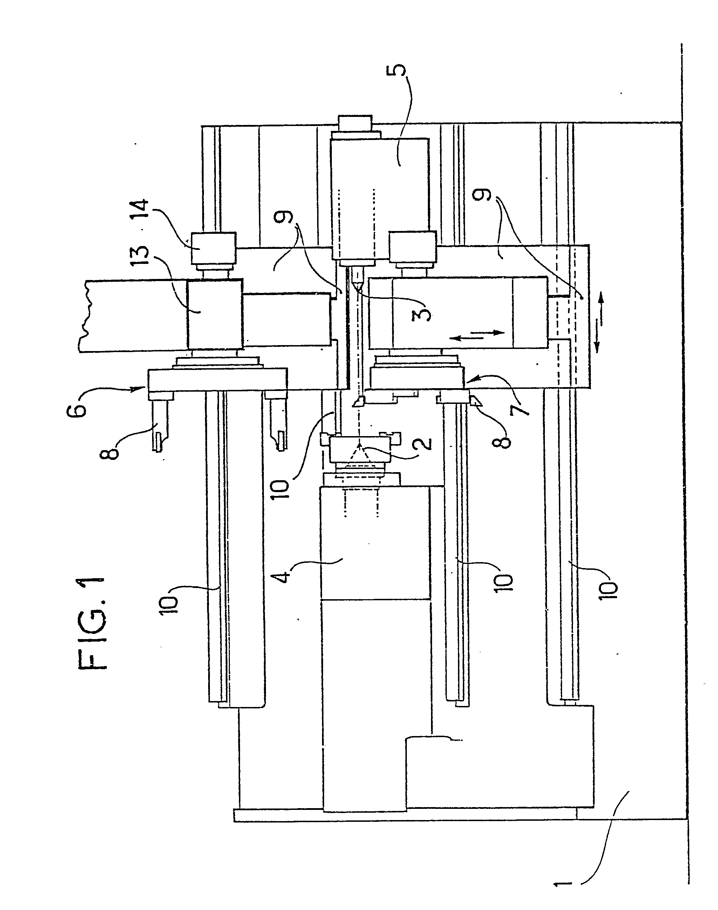

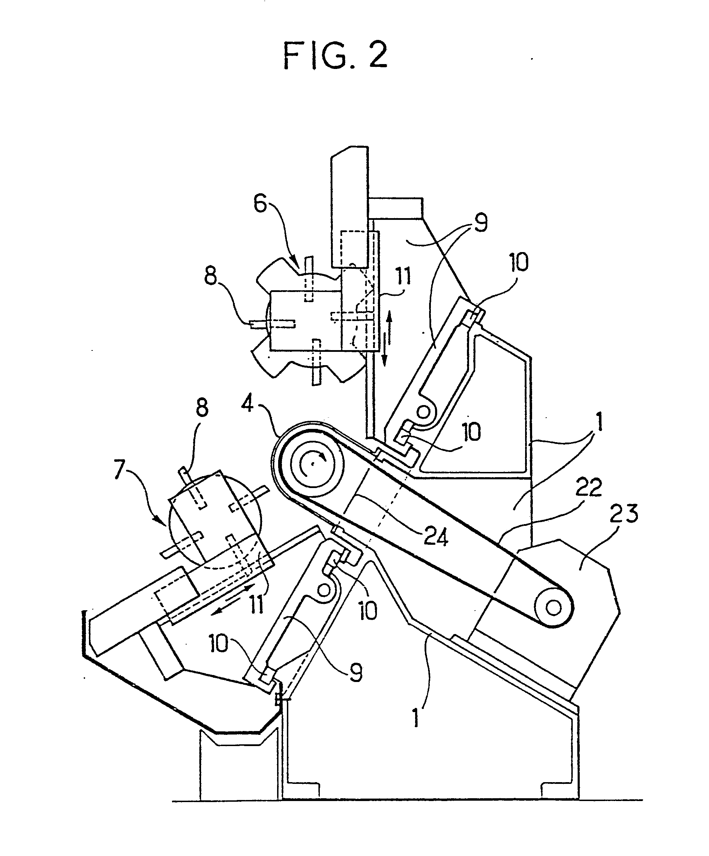

En référence aux figures 1 et 2 un centre de tournage selon l'invention comporte un bâti ou banc 1 sur lequel sont montées une broche 2 et une contre-pointe 3 liées respectivement à une poupée 4 et une contre-poupée 5. La pièce à usiner (non représentée) est disposée dans le mandrin de la broche 2 et éventuellement la contre-pointe 3.

Deux tourelles porte-outils 6 et 7 sont disposées de part et d'autre de la pièce à usiner. Des outils 8 sont fixés auxdites tourelles, elles-mêmes montées chacune sur un chariot 9 apte à coulisser en translation horizontale sur le bâti 1 par l'intermédiaire de glissières telles que 10. Chacune des tourelles peut être entraînée en translation sur son chariot le long de glissières 11 (figure 2) afin d'amener les outils en position d'usinage.

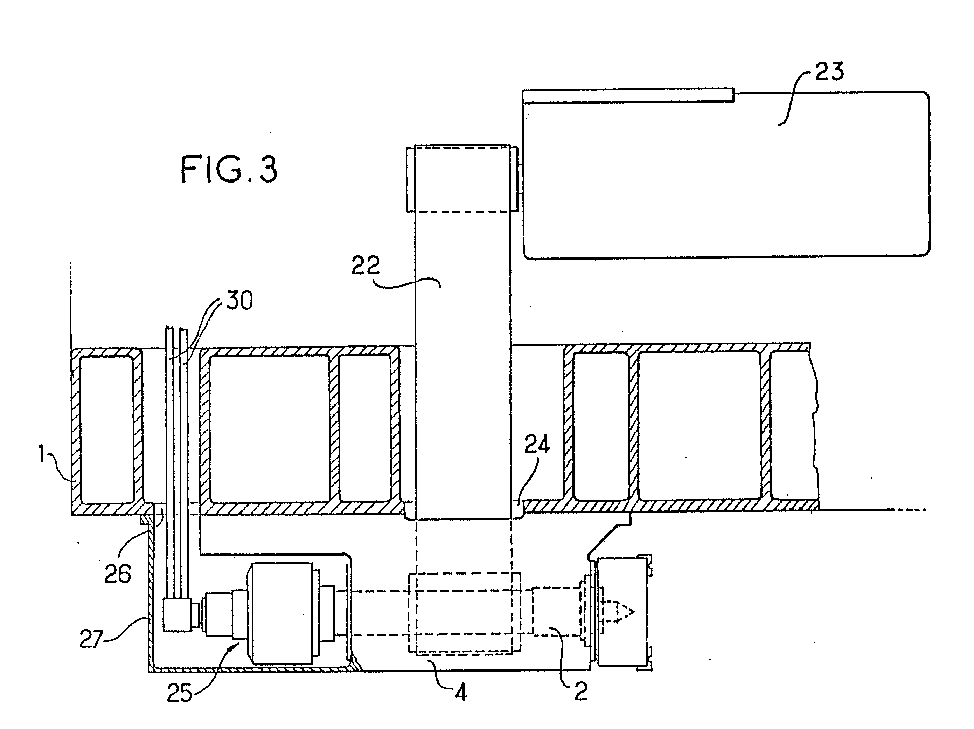

En se référant aux figures 2 et 3, on voit que la broche 2 de la poupée 4 est mue par une courroie 22 ou un engrenage entraînée par un moteur 23. Ladite courroie 22 traverse la surface d'appui de la poupée 4 sur le banc 1 par l'intermédiaire d'une ouverture 24.

De même raccordements électriques, hydrauliques ou pneumatiques 30 des équipements auxiliaires 25 situés à l'arrière de la poupée tels que vérin de serrage du mandrin, capteurs d'indexage de broche, dynamo tachymétrique et autres traversant une ouverture 26 aménagée à l'intérieur de la surface d'appui de la poupée 4 sur le banc 1.

Une telle disposition permet de garder libre les deux faces latérales de la poupée pour permettre le libre passage des chariots 9 par déplacement suivant les glissières 10 et la face 27 opposée au mandrin de broche pour disposer derrière la poupée d'un espace réservé aux changements de tourelles.

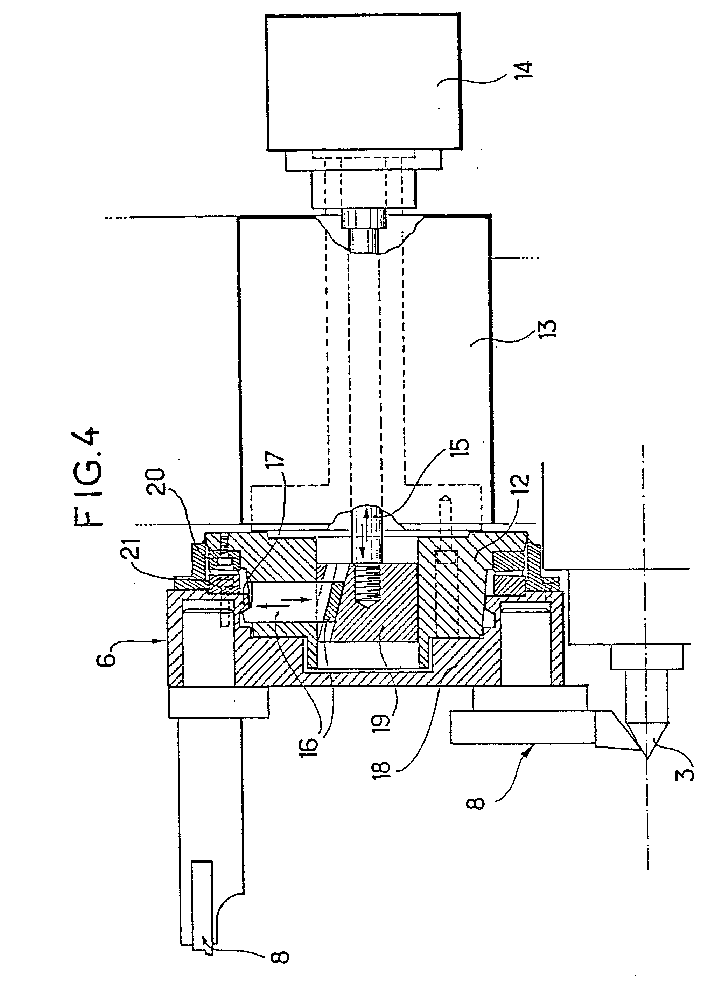

La figure 4 représente de façon plus détaillée une tourelle par exemple la tourelle 6. Elle comporte une embase 12 assujettie à un organe rotatif 13 et à une tige 15 commandée par un vérin 14. L'embase 12 comprend en outre, trois doigts tels que 16 mobiles radialement dans un moyeu 19 et aptes à venir s'engager dans un embrèvement conique 17 d'une partie interchangeable 18 de la tourelle sur laquelle sont fixés les outils tels que 8.

L'embase 12 comprend aussi une denture radiale telle que 20 ou tout autre système pour centrer et indexer angulairement la partie interchangeable 18 de la tourelle sur laquelle est montée la contrepartie 21 de la denture 20.

Un tel centre de tournage fonctionne de la façon suivante:

Lorsque à l'issue d'un certain temps d'usinage, il s'avère nécessaire de changer les outils de l'une ou de l'autre, ou des deux tourelles, le ou les chariots 9 porte-tourelle sont amenés en translation en bout des glissières 10, à l'extérieur des organes rotatifs du centre de tournage, c'est-à-dire en dehors de la tranche d'espace ou espace de travail située entre la poupée 4 et la contre-poupée 5.

La partie interchangeable 18 portant les outils usés est alors dissociée de son embase 12, par poussée de la tige 15, ce mouvement étant en sens inverse de celui mis en oeuvre pour solidariser une partie interchangeable 18 avec l'embase 12.

Une autre partie interchangeable 18 équipée d'outils neufs et préréglée est alors mise en place sur l'embase 12. Une telle mise en place est effectuée par retrait axial de la tige 15 commandée par le vérin 14 qui force en un mouvement radial les trois doigts 16, lesquels viennent s'engager dans l'embrèvement conique 17. Le chariot 9 porte-tourelle est alors ramené dans le champ de tournage et ladite tourelle sera remise en service.

Une tourelle peut être échangée pendant que l'autre est en phase d'usinage, mais un mode partiulier et préférentiel consiste à changer les deux tourelles pendant qu'une manutention automatique procède au changement de la pièce entre la broche 2 et la contrepoint 3. Cela est rendu possible grâce aux dispositions et solutions choisies selon l'invention qui permettent de séparer l'espace où s'effectuent les changements de tourelles de la tranche d'espace où s'opèrent l'usinage et le changement de la pièce à usiner.

Selon un autre mode opératoire une ou deux tourelles sont en service pendant que l'on procède au changement des outils sur d'autres tourelles. Ces tourelles sont interchangées entre elles pendant que s'effectue le changement de la pièce à usiner.

Il n'y a donc pas d'arrêt du cycle de production ce qui se traduit par une diminution du temps et du coût de production.

En outre, le temps de changement d'outils sur une tourelle est rapide et sa durée en tous cas inférieure au temps d'usure des outils portés par la tourelle en fonctionnement; de la sorte tout temps mort se trouve limité au mieux dans un cycle de fabrication du centre de tournage.

Le préréglage des outils sur tourelles interchangeables en salle de métrologie, n'exclut pas une faible erreur résiduelle de réglage des outils. Néanmoins on peut constater d'une façon précise, en salle de métroligie ces erreurs résiduelles, les mettre en mémoire et les introduire manuellement ou automatiquement sous forme de corrections de cotes dans l'équipement de commande numérique du centre de tournage, ce qui se traduit par une amélioration de la qualité de l'usinage.

## Revendications

1. Centre de tournage du type comportant un banc (1), une broche (2) montée dans une poupée (4) disposée sur ledit banc, au moins une tourelle porteoutils (6) amovible, montée sur un chariot (9), la tourelle étant montée de façon déplaçable en translation de l'extérieur de l'espace de travail dans lequel se trouve la pièce à usiner vers l'intérieur dudit espace de travail pour usinage d'une pièce et inversément, ladite tourelle (6) comprenant une embase (12) et une partie interchangeable (18) portant les outils (8), des moyens étant prévus pour remplacer automatiquement à l'extérieur dudit espace de travail cette partie interchangeable (18) portant des outils usés par une autre partie interchangeable, caractérisé en ce qu'il comporte deux tourelles porte-outils (6, 7) montées chacune sur un chariot (9), chaque chariot étant mobile indépendamment de l'autre dans une direction parallèle à l'axe de la broche (2) et en ce que ledit banc (1) comporte une première ouverture (24) au travers de laquelle passent les moyens de transmission de mouvement entre un moteur (23) situé sous le banc (1) et la broche (2) de la poupée (4) et une seconde ouverture (26) pour le passage des liaisons de commande avec des équipements auxiliaires (25) situés derrière la poupée (4) de manière à laisser de libre passage des chariots (9) le long des faces latérales de la poupée (4) et le libre passage des tourelles (6, 7) derrière la poupée (4) pour le changement des parties interchangeables (18).

2. Cente de tournage selon la revendication 1, caractérisé par le fait que lesdites tourelles porte-outils (6) (7) sont agencées pour être déplacées simultanément vers l'extérieur dudit espace de travail de sorte que le remplacement de leurs parties interchangeables (18) portant des outils usés par une autre partie interchangeable (18) portant des outils neufs s'effectue en même temps que le remplacement d'une pièce usinée par une pièce à usiner à l'intérieur dudit espace de travail.

3. Centre de tournage selon la revendication 1, caractérisé par le fait que l'une desdites tourelles porte-outils (6) (7) est agencée pour être déplacée vers l'extérieur dudit espace de travail pour le remplacement de sa partie interchangeable (18) portant des outils usés par une autre partie interchangeable (18) portant des outils neufs pendant que l'autre tourelle port-outils (7) effectue l'usinage d'une pièce à l'intérieur dudit espace de travail.

4. Centre de tournage selon l'une des revendications 1 à 3, caractérisé par le fait que ladite broche (2) et ladite poupée (4) sont mues par des moyens (22) entraînés par un moteur (23), lesdits moyens (22) traversant la surface d'appui de la poupée (4) sur le banc (1) par l'intermédiaire d'une première ouverture (24).

5. Centre de tournage selon l'une des revendications 1 à 4, caractérisé par le fait que les raccordements électriques, hydrauliques, pneumatiques (30) et autres des organes auxiliaires (25) situés à l'arrière de la poupée (4) sont effectués par l'intermédiaire d'une deuxième ouverture.

## Patentansprüche

1. Drehmaschine der Art, die eine Bank (1), eine in einen auf der Bank angeordneten Spindelstock (4) eingebaute Arbeitsspindel (2), mindestens einen auswechselbaren Werkzeugträgerturm (6) aufweist, der sich auf einem Wagen (9) befindet und so eingebaut ist, daß er von außerhalb des Arbeitsbereichs, in dem sich das Werkstück befindet, nach dem Inneren dieses Arbeitsbereichs zur Bearbeitung eines Stücks und umgekehrt verschoben werden kann, wobei der Turm (6) einen Sockel (12) und ein auswechselbares Teil (18) aufweist, das die Werkzeuge (8) trägt, während Mittel vorgesehen sind, durch die automatisch außerhalb des Arbeitsbereichs dieses die gebrauchten Werkzeuge tragende auswechselbare Teil (18) durch ein anderes auswechselbares Teil ersetzt wird, dadurch gekennzeichnet, daß zwei Werkzeugträgertürme (6, 7) vorgesehen sind, die je auf einem Wagen (9) angeordnet sind, wobei jeder Wagen unabhängig von dem anderen in einer zur Achse der Arbeitsspindel (2) parallelen Richtung beweglich ist, und daß die Bank (1) eine erste Öffnung (24), durch die die Bewegungsübertragungsmittel zwischen einem Motor (23), der sich unter der Bank (1) befindet und der Arbeitsspindel (2) des Spindelstocks (4) hindurchgehen, und eine zweite Öffnung (26) für den Durchgang der Steuerverbindungen mit Hilfsorganen (25) aufweist, die sich hinter dem Spindelstock (4) befinden, so daß die Wagen (9) sich entlang der Seitenflächen des Spindelstocks (4) und die Türme (6, 7) hinter dem Spindelstock (4) zum Auswechseln der auswechselbaren Teile (18) frei bewegen können.

2. Drehmaschine nach Anspruch 1, dadurch gekennzeichnet, daß die Werkzeugträgertürme (6) (7) so angeordnet sind, daß sie gleichzeitig aus dem Arbeitsbereich hinausbewegt werden können, so daß das Auswechseln ihrer auswechselbaren Teile (18), die verbrauchte Werkzeuge tragen, durch ein anderes auswechselbares Teil (18) mit neuen Werkzeugen gleichzeitig mit dem Auswechseln eines bearbeiteten Werkstücks durch ein zu bearbeitendes Werkstück im Inneren des Arbeitsbereichs erfolgt.

3. Drehmaschine nach Anspruch 1, dadurch gekennzeichnet, daß einer der Werkzeugträgertürme (6) (7) so angeordnet ist, daß er aus dem Arbeitsbereich hinausbewegt werden kann zum Auswechseln seines auswechselbaren Teils (18) mit den verbrauchten Werkzeugen durch ein anderes auswechselbares Teil (18) mit neuen Werkzeugen, während der andere Werkzeugträgerturm (7) die Bearbeitung eines Werkstücks im Inneren des Arbeitsbereichs durchführt.

4. Drehmaschine nach einem der Ansprüche 1 bis 3, dadurch gekennzeichnet, daß die Arbeitsspindel (2) und der Spindelstock (4) durch Mittel (22) in Bewegung versetzt werden, die von einem Motor (23) angetrieben werden, wobei diese Mittel (22) die Anschlagfläche des spindelstocks (4) auf der Bank (1) durch eine erste Öffnung (24) durchqueren.

5. Drehmaschine nach einem der Ansprüche 1 bis 4, dadurch gekennzeichnet, daß elektrischen, hydraulischen, pneumatischen (30) und anderen Anschlüsse der Hilfsorgane (25), die sich hinter dem spindelstock (4) befinden, durch eine zweite Öffnung erfolgen.

## Claims

1. A turning center of the type comprising a bench (1), a spindle (2) installed in a headstock (4) disposed in said bench, at least one detachable tool-carrier turret (6) installed on a carriage (9), wherein said turret installed on its carriage can be moved from outside the work space in which the work piece to be machined is located to inside this space in order to machine the work piece and back again, said turret (6) including a base (12) and an interchangeable tool-carrier part (18) carrying tools (8), means being provided for automatic replacement outside the work space of an interchangeable part (18) that carries worn tools for another interchangeable part, characterized in that it comprises two tool-carrier turrets (6, 7), each installed on a carriage (9), each carriage being mobile independently of the other in a direction parallel to the axis of the spindle (2) and in that said bench (1) comprises a first opening (24) through which pass the means for transmitting a movement between a motor (23) situated under the bench (1) and the spindle (2) of the headstock (4), and a second opening (26) for the passage of control couplings with auxiliary equipments (25) located at the rear of the headstock (4) in order to ensure a free passage of the carriages (9) along the lateral faces of the headstock (4) and a free passage of the turrets (6, 7) behind the headstock (4) for the exchange of the interchangeable parts (18).

2. A turning center according to claim 1, characterized in that said tool-carrier turrets (6) (7) are suitable to be moved simultaneously outside said work space so that their interchangeable parts (18) that carry worn tools can be replaced by other interchangeable parts (18) that carry new tools at the same time as a machined workpiece is replaced by a workpiece to be machined inside said work space.

3. A turning center according to claim 1, characterized in that one of said tool-carrier turrets (6) (7) is capable of being moved outside said work space so that its interchangeable part (18) that carries worn tools is replaced by another interchangeable part (18) that carries new tools while the other tool-carrier turret (7) machines a workpiece inside said work space.

4. A turning center according to one of claims 1 to 3, characterized in that said spindle (2) and said headstock (4) are moved by means (22) driven by a motor (23), said means (22) passing through the bearing surface of the headstock (4) on the bench (1) via a first opening (24).

5. A turning center according to one of claims 1 to 4, characterized in that the electrical, hydraulical, pneumatical and other connections (30) of the auxiliary equipments (25) located at the rear of the headstock (4) are carried out through a second opening.

FIG. 1

# FIG. 2

FIG.3

# FIG.4

0 027 253